Europäisches Patentamt

**European Patent Office**

**Office européen des brevets**

(11) Veröffentlichungsnummer: **0 209 198**
**A2**

(12) **EUROPÄISCHE PATENTANMELDUNG**

(21) Anmeldenummer: 86201235.8

(51) Int. Cl.⁴: **H 04 N 9/45**

(22) Anmeldetag: 15.07.86

(30) Priorität: 17.07.85 DE 3525492

(43) Veröffentlichungstag der Anmeldung: 21.01.87
Patentblatt 87/4

(84) Benannte Vertragsstaaten: **AT DE FR GB**

(71) Anmelder: **Philips Patentverwaltung GmbH,
Billstrasse 80, D-2000 Hamburg 28 (DE)**

(84) Benannte Vertragsstaaten: **DE**

(71) Anmelder: **N.V. Philips' Gloeilampenfabrieken,
Groenewoudseweg 1, NL-5621 BA Eindhoven (NL)**

(84) Benannte Vertragsstaaten: **FR GB AT**

(72) Erfinder: **Wölber, Jörg, Taubenstrasse 32,
D-2080 Pinneberg (DE)**
Erfinder: **Gedl, Karl, Schwadorfer Strasse 8, A-3106 St.
Pölten (AT)**

(74) Vertreter: **Hartmann, Heinrich, Dipl.-Ing. et al, Philips
Patentverwaltung GmbH
Billstrasse 80 Postfach 10 51 49,
D-2000 Hamburg 28 (DE)**

(54) Schaltungsanordnung für ein Farbbildaufzeichnungs- und Wiedergabegerät oder einen Farbfernsehempfänger.

(57) Die Erfindung betrifft eine Schaltungsanordnung für ein Farbbildaufzeichnungs- und Wiedergabegerät oder einen Farbfernsehempfänger. Solche Geräte weisen einen Phasenregelkreis auf, in dem ein Oszillator (18, 59) entsprechend dem in einer Phasenvergleichsschaltung (9, 40) stattfindenden Phasenvergleich zwischen Farbsynchronsignal und einem Vergleichssignal gesteuert wird. Das Steuersignal wird wenigstens zwei nacheinander und zyklisch umschaltbaren Abtast- und Haltegliedern (12, 13; 49 bis 52) zugeführt. Diese tasten das Steuersignal während der Farbsynchronaustastzeit ab. Die Ausgangssignale der Abtast- und Halteglieder (12, 13; 49 bis 52) werden einem Addierer (16, 54) zugeführt, der mit dem Oszillator (18, 59) gekoppelt ist. Dadurch mitteln sich z.B. die dem Steuersignal überlagerten durch die PAL-Umschaltung bedingten Störsignale heraus.

ACTORUM AG

Schaltungsanordnung für ein Farbbildaufzeichnungs- und
Wiedergabegerät oder einen Farbfernsehempfänger

Die Erfindung betrifft eine Schaltungsanordnung für ein
Farbbildaufzeichnungs- und Wiedergabegerät oder einen
Farbfernsehempfänger, mit einem Phasenregelkreis, der
einen spannungsgesteuerten Oszillator und eine Phasenvergleichsschaltung umfaßt, die einen ersten Eingang zum
Zuführen eines Farbsynchronsignals, einen zweiten Eingang
zum Zuführen eines aus dem Oszillator abgeleiteten Signals
und einen Ausgang enthält, der mit einem Steuereingang des
Oszillators gekoppelt ist, dessen Ausgang mit dem zweiten
Eingang der Phasenvergleichsschaltung gekoppelt ist.

Eine solche Schaltungsanordnung ist aus dem Buch von
Limann/Pelka, "Fernsehtechnik ohne Ballast", Franzis-
Verlag München, 14. Auflage, 1983, Seite 332 bis 342,
insbesondere Abb. 16.11 für Farbfernsehempfänger bekannt.
Im Phasenregelkreis wird das Ausgangssignal des spannungsgesteuerten Oszillators, das für die Synchrondemodulation
der quadraturamplitudenmodulierten Farbdifferenzsignale
benötigt wird, mit dem Farbsynchronsignal synchronisiert.
Da bei den PAL-Systemen die Phase des Farbsynchronsignals
von Zeile zu Zeile um 90° wechselt, springt auch das
Steuersignal der Phasenvergleichsschaltung mit der halben
Zeilenfrequenz. Damit nur der Mittelwert des wechselnden
Signals der Phasenvergleichsschaltung auf den spannungsgesteuerten Oszillator einwirkt, ist ein Tiefpaß der Phasenvergleichsschaltung nachgeschaltet. Dieser Tiefpaß hat
eine große Zeitkonstante, damit das durch die alternierende Phase des Farbsynchronsignals hervorgerufene
Wechselsignal genügend gut unterdrückt wird. Daher können
Regelabweichungen auch nur langsam ausgeregelt werden.

Bei den heute üblichen Videorecordersystemen wird bei der Aufzeichnung das bandbegrenzte Helligkeitssignal frequenzmoduliert in einen höheren Frequenzbereich und das Farbartsignal amplitudenmoduliert in einen niedrigeren Frequenzbereich gelegt. Gleichzeitig werden die Farbartsignale bestimmter Zeilen eines Halbbildes um einen konstanten Betrag in der Phase verschoben. Bei der Wiedergabe wird diese Phasenveränderung bei der Frequenzumsetzung wieder rückgängig gemacht und damit auch die Anteile der von den Nebenspuren hervorgerufenen Übersprechstörungen in der Phase verändert. In einem Kammfilter werden die Übersprechstörungen dann unterdrückt. Der Ausgang des Kammfilters ist mit dem Eingang des Phasenregelkreises verbunden, mit dessen Hilfe ein Träger für die Modulation erzeugt wird.

Bei einem VHS-System nach der PAL- oder NTSC-Norm wird der Abstand der nebeneinanderliegenden Spuren bei einem Wechsel des Bandes von 4 Stunden Spieldauer auf 6 bzw. 8 Stunden Spieldauer verringert. Die Übersprache von den Nachbarspuren ist bei der Wiedergabe von einem Band mit 4 Stunden Spieldauer so gering, daß der Eingang des Phasenregelkreises vor das Kammfilter gelegt werden kann. Dadurch wird die Regelgeschwindigkeit des Phasenregelkreises erhöht. Bei der Wiedergabe von einem Band mit 6 bzw. 8 Stunden Spieldauer tritt eine merkliche Übersprache ohne Verwendung des Kammfilters auf, da die Spuren enger als bei einem Band mit 4 Stunden Spieldauer nebeneinanderliegen. Diese Übersprachstörungen treten bedingt durch die Phasenänderung bei der Frequenzumsetzung im Steuersignal der Phasenvergleichsschaltung mit einer konstanten Frequenz auf, die kleiner als die Zeilenfrequenz ist und ein ganzzahliges Verhältnis mit der Zeilenfrequenz bildet. Außer der oben genannten Störung durch die PAL-Umschaltung ist also in einem PAL-VHS-System im Steuersignal der Phasenvergleichsschaltung eine Störung, hervorgerufen durch die Phasenänderung, deren Frequenz ein Viertel der Zeilenfrequenz beträgt, vorhanden. Bei einem VHS-System nach der NTSC-Norm tritt eine durch die Phasenänderung bedingte Störung mit halber Zeilenfrequenz im Steuersignal der Phasenvergleichsschaltung auf.

Der Erfindung liegt die Aufgabe zugrunde, eine Schaltungsanordnung der eingangs genannten Art so auszubilden, daß die im Phasenregelkreis auftretenden Störungen, deren Frequenz gleich einem Teil der Zeilenfrequenz ist, eliminiert werden und eine schnelle Regelung erfolgt.

Diese Aufgabe wird erfindungsgemäß dadurch gelöst, daß der Ausgang der Phasenvergleichsschaltung über wenigstens ein erstes und ein zweites Abtast- und Halteglied mit einem ersten bzw. zweiten Eingang eines Addierers gekoppelt ist, dessen Ausgang mit dem Steuereingang des Oszillators gekoppelt ist, und daß die Abtast- und Halteglieder eingerichtet sind zum im zeilenweisen Wechsel nacheinander Abtasten des Ausgangssignals der Phasenvergleichsschaltung während der Farbsynchronaustastzeiten.

In der erfindungsgemäßen Schaltungsanordnung ist nur immer jeweils ein Abtast- und Halteglied während der Farbsynchronaustastzeit (das ist die Zeit, in der das Farbsynchronsignal auftritt) im Abtastzustand. Die anderen Abtast- und Halteglieder speichern den jeweils zuletzt abgetasteten Wert. Im Addierer überlagern sich die Störkomponenten, so daß diese durch Mittelung beseitigt werden. Für die Beseitigung der durch die PAL-Umschaltung hervorgerufenen mit halber Zeilenfrequenz auftretenden Störung werden zwei Abtast- und Halteglieder benötigt. Die Anzahl der Abtastglieder für die Übersprechkompensation richtet sich nach der Größe der Frequenz mit der diese Störung dem Steuersignal der Phasenvergleichsschaltung überlagert ist. Die Größe dieser Frequenz entspricht der Zeilenfrequenz dividiert durch einen ganzzahligen Teilerfaktor. Die Anzahl der erforderlichen Abtast- und Halteglieder ist gleich diesem Teilerfaktor.

Es sei noch erwähnt, daß aus der deutschen Patentschrift 31 14 198 eine Schaltungsanordnung bekannt ist, bei der ein erstes Abtast- und Halteglied zum Halten der in ersten, wechselnden Zeilen auftretenden Phasenfehler und ein zweites Abtast- und Halteglied zum Halten der in zweiten, wechselnden Zeilen auftretenden Phasenfehlern dient. Diese Phasenfehler werden z.B. vor der Aufzeichnung in einem Videogerät in einer Videokamera erzeugt und sind Fehler in der Phasenbeziehung aufeinanderfolgender Farbsynchronsignale. Die Ausgangssignale dieser beiden Abtast- und Halteglieder laufen durch Filter zu einem Integrierverstärker, der ein Phasenfehlerkorrektursignal erzeugt. Es werden in der bekannten Schaltungsanordnung die Ausgänge der Abtast- und Halteglieder nicht mit einem Addierer gekoppelt, und es wird auch das durch die PAL-Umschaltung hervorgerufene Störsignal mit einer anderen Schaltung beseitigt.

Aus der DE-AS 26 46 737 ist noch eine Schaltungsanordnung bekannt, bei der zwischen der Phasenvergleichsschaltung und dem spannungsgesteuerten Oszillator zwei nacheinander und zyklisch umgeschaltete Abtast- und Halteglieder angeordnet sind. Hierbei ist jedoch nur während der Dauer der Farbsynchronsignale ein Abtast- und Halteglied aufgetastet, während demgegenüber das andere nur während der Rücklaufintervalle mit Ausnahme der Dauer der Farbsynchronsignale aufgetastet ist. Hierdurch wird eine Drift der Abstimmspannung des spannungsgesteuerten Oszillators vermieden.

In einer ersten Weiterbildung der Erfindung ist für einen Fernsehempfänger nach der PAL-Norm vorgesehen, daß ein PAL-Decoder zur Gewinnung der Farbdifferenzsignale vorgesehen ist mit einem ersten Eingang zum Zuführen eines Farbartsignals und mit einem zweiten Eingang, der mit dem Ausgang des Oszillators gekoppelt ist, und daß der Phasenvergleichsschaltung zwei Abtast- und Halteglieder nachgeschaltet sind. In einem Fernsehempfänger müssen die durch die wechselnde Phase des Farbsynchronsignals am Ausgang der Phasenvergleichsschaltung halbzeilenfrequenten, mit gleichem Betrag, aber unterschiedlichem Vorzeichen auftretenden Signalanteile durch Mittelung beseitigt werden.

In einer zweiten Weiterbildung der Erfindung ist für ein Bildaufzeichnungs- und Wiedergabegerät vorgesehen, daß ein Modulator vorgesehen ist zum Modulieren eines Farbartsignals von einem ersten auf einen zweiten Träger mittels eines dritten Trägers, daß der Modulator einen ersten Eingang zum Zuführen des Farbartsignals, einen zweiten Eingang zum Zuführen des dritten Trägers und einen Ausgang enthält, der mit dem ersten Eingang der Phasenvergleichsschaltung gekoppelt ist, daß zur Wiederherstellung der Originalphasenlage des zweiten Trägers und zum Rückgängigmachen der bei der Aufzeichnung beim ersten Träger vorgenommenen Phasenveränderung eine Phasenfortschaltung dem spannungsgesteuerten Oszillator nachgeschaltet ist und daß zur Bildung des dritten Trägers ein Mischer mit einem ersten und einem zweiten Eingang vorgesehen ist, die jeweils mit einem Ausgang der Phasenfortschaltung und eines Referenzoszillators gekoppelt sind. Bei der Wiedergabe wird die Phasenveränderung der Farbartsignale, die bei der Aufzeichnung während bestimmter Zeilen eines Halbbildes um einen konstanten Betrag in der Phase verschoben worden sind, wieder rückgängig gemacht, indem der dritte Träger mit Hilfe der Phasenfortschaltung in der Phase während bestimmter Zeilen verändert wird. Die durch diese Phasenfortschaltung in der Phase geänderten Übersprechanteile der Farbsynchronsignale werden mit Hilfe der Abtast- und Halteglieder beseitigt.

Sollen in einem Bildaufzeichnungs- und Wiedergabegerät nach der PAL-Norm die Übersprechanteile und die durch die PAL-Umschaltung hervorgerufenen Anteile im Ausgangssignal der Phasenvergleichsschaltung beseitigt werden, so müssen der Phasenvergleichsschaltung wenigstens vier Abtast- und Halteglieder nachgeschaltet werden.
Anhand der Zeichnungen werden im folgenden Ausführungsbeispiele der Erfindung beschrieben. Es zeigt

Fig. 1 ein erstes Ausführungsbeispiel der Erfindung als Teil einer Fernsehempfängerschaltung,

Fig. 2 Diagramme zur Erläuterung der Erfindung in Fig. 1,

Fig. 3 ein zweites Ausführungsbeispiel der Erfindung als Teil einer Videorecorderschaltung und

Fig. 4 Diagramme zur Erläuterung der Erfindung in Fig. 2.

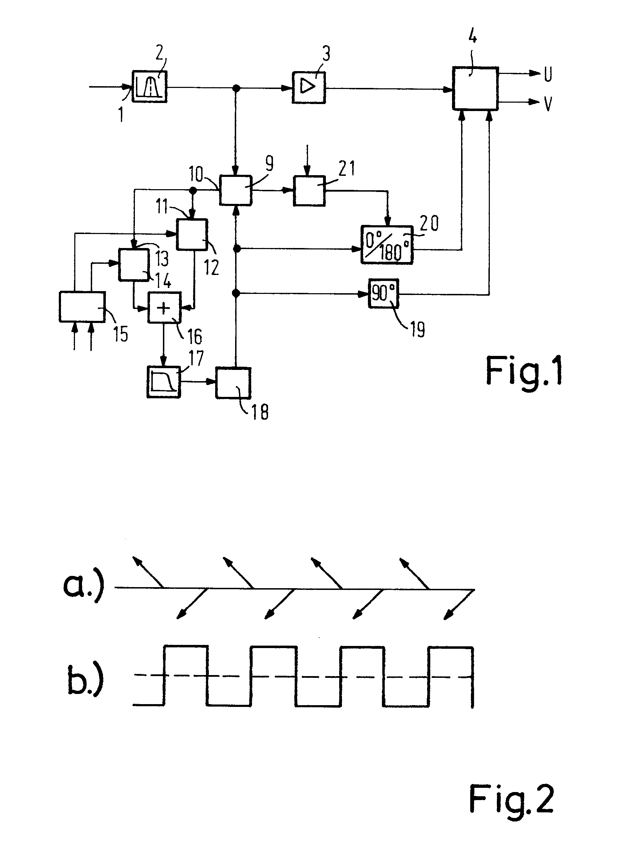

In Fig. 1 wird einem Eingang 1 eines Bandpasses 2 mit einer Mittenfrequenz von 4,43 MHz ein FBAS-Signal nach der PAL-Norm zugeführt. Das FBAS-Signal hat zuvor die in einem Fernsehempfänger üblichen nicht näher dargestellten Signalstufen wie Tuner, Bildzwischenfrequenzfilter und -demodulator durchlaufen. Das Ausgangssignal des Bandpasses 2, das Farbartsignal, wird einem Farbartsignalverstärker 3 zugeführt. Dem Farbartsignalverstärker 3 ist ein PAL-Decoder 4 nachgeschaltet, an dessen Ausgängen jeweils die Farbdifferenzsignale U und V auftreten.

Das Ausgangssignal des Bandpasses 2 wird einer Phasenvergleichsschaltung 9 zugeführt. Der Ausgang 10 der
Phasenvergleichsschaltung 9 ist einerseits mit dem
Eingang 11 eines ersten Abtast- und Haltegliedes 12 und
andererseits mit dem Eingang 13 eines zweiten Abtast- und
Haltegliedes 14 verbunden. Gesteuert werden die beiden
Abtast- und Halteglieder 12 und 14 von einer Auswahlschaltung 15, die zeilenfrequente Impulse und die Farbsynchronaustastimpulse erhält, so daß nur ein Abtast- und
Halteglied während der Farbsynchronaustastzeit einer Zeile
im Abtastzustand ist. Während einer Farbsynchronaustastzeit tastet z.B. das Abtast- und Halteglied 12 das
Ausgangssignal der Phasenvergleichsschaltung 9 ab, und das
Abtast- und Halteglied 14 speichert das zuletzt abgetastete Signal. Während der darauffolgenden Farbsynchronaustastzeit ist das Abtast- und Halteglied 14 im Abtastzustand und das Abtast- und Halteglied 12 im Haltezustand. Während der nächsten Farbsynchronaustastzeit
beginnt der Zyklus von neuem.

Die Ausgangssignale der Abtast- und Halteglieder 12 und 14
werden in einem Addierer 16 überlagert und über einen zur
Störunterdrückung dienenden Tiefpaß 17 als Steuersignal
einem Oszillator 18, der ein Farbhilfsträgersignal von
4,43 MHz erzeugt, zugeführt. Das Ausgangssignal des
Oszillators 18 wird auf die Phasenvergleichsschaltung 9
gegeben. Der aus der Phasenvergleichsschaltung 9, den
beiden Abtast- und Haltegliedern 12 und 14, dem
Addierer 16, dem Tiefpaß 17 und dem Oszillator 18
gebildeten Phasenregelkreis dient zur Synchronisation der
Farbsynchronsignale mit dem im Oszillator 18 erzeugten
Farbhilfsträgersignal. Der Tiefpaß 17 hat eine hohe Grenzfrequenz und damit eine kleine Zeitkonstante, so daß eine
schnelle Regelung erfolgen kann. Das Ausgangssignal des
Oszillators 18 wird noch über einen 90$^O$-Phasenschieber 19

und über einen PAL-Schalter 20 jeweils dem PAL-Decoder 4 zugeführt. Wie bekannt, dient der Phasenschieber 19 dazu, ein für die Quadraturdemodulation erforderliches, um 90° verschobenes Farbträgerhilfssignal zu erzeugen, und der PAL-Schalter 20 dazu, die von Zeile zu Zeile wechselnde 180°-PAL-Umschaltung zu berücksichtigen. Der PAL-Schalter 20 wird von der Steuerschaltung 21 gesteuert, der ein zeilenfrequentes Signal und noch ein in der Phasenvergleichsschaltung 9 erzeugter halbzeilenfrequenter Kennimpuls zugeführt wird.

Bei einem PAL-codierten Fernsehsignal wechselt die Phase des Farbsynchronsignals von Zeile zu Zeile um 90°. Im Farbkreis liegen die Farbsynchronsignale einerseits bei 135° und andererseits bei 225° bezogen auf das Farbdifferenzsignal U. Im Diagramm a der Fig. 2 ist die Lage der Farbsynchronsignale im Farbkreis für einige Zeilen dargestellt (vor der Phasenvergleichsschaltung 9). Am Ausgang 10 der Phasenvergleichsschaltung 9 erhält man nach dem Phasenvergleich ein Steuersignal, das von der Phasenabweichung zwischen dem Farbsynchronsignal und dem im Oszillator 18 erzeugten Farbhilfsträgersignal abhängt. Da das Farbsynchronsignal von Zeile zu Zeile alternierend (vor der Phasenvergleichsschaltung 9) ist, ist dem durch die Phasenabweichung bedingten Steuersignal ein Signal mit halber Zeilenfrequenz überlagert. Im Diagramm b der Fig. 2 ist dieses mit halber Zeilenfrequenz auftretende Signal aufgezeichnet. Da im Addierer 16 immer das aktuelle und das um eine Zeile verzögerte Ausgangssignal der Phasenvergleichsschaltung überlagert werden, mittelt sich das mit halber Zeilenfrequenz auftretende Signal heraus. Das Farbhilfsträgersignal kann also sehr schnell mit dem Farbsynchronsignal synchronisiert werden, da nur eine Verzögerung von einer Zeile auftritt.

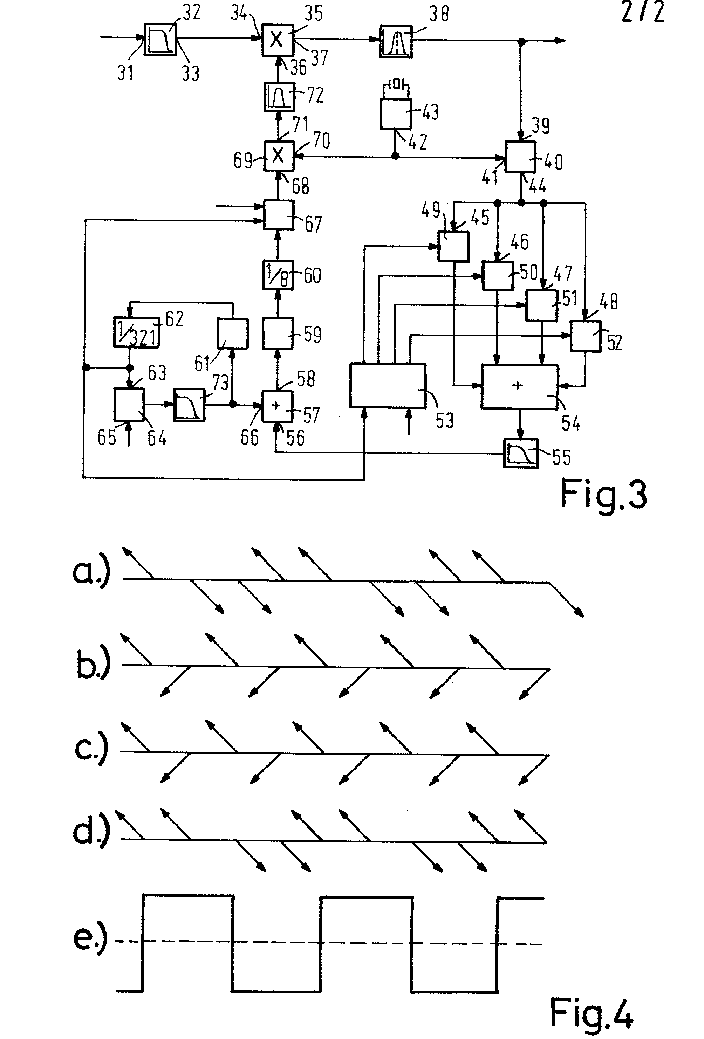

Ein zweites Ausführungsbeispiel, das eine Schaltungsanordnung für einen Videorecorder nach der VHS-PAL-Norm betrifft, ist in Fig. 3 dargestellt. Dem Eingang 31 eines Tiefpasses 32 mit einer Grenzfrequenz von 1,1 MHz wird ein über die Videoköpfe wiedergegebenes PAL-codiertes Videosignal zugeführt. Am Ausgang 33 des Tiefpasses 32 liegt ein vom Helligkeitssignal befreites Farbartsignal vor. Der Ausgang 33 des Tiefpasses 32 ist mit einem Eingang 34 eines Modulators 35 verbunden. Im Modulator 35 wird das Farbartsignal von einem ersten Träger mit einer Frequenz von 627 kHz auf einen zweiten Träger mit einer Frequenz von 4,43 MHz moduliert. Für diesen Umsetzungsprozeß wird einem zweiten Eingang 36 des Modulators 35 ein dritter Träger von 5,06 MHz zugeführt. Das am Ausgang 37 des Modulators 35 liegende Modulationsprodukt enthält das um den Träger mit einer Frequenz von 4,43 MHz liegende Farbartsignal und einen höherfrequenten Signalanteil, der im nachgeschalteten Bandpaß 38 mit einer Mittenfrequenz von 4,43 MHz unterdrückt wird. Das Ausgangssignal des Bandpasses 38, das auch das Ausgangssignal der Schaltungsanordnung ist, wird einem Eingang 39 einer Phasenvergleichsschaltung 40 zugeführt. Ein anderer Eingang 41 der Phasenvergleichsschaltung 40 ist mit einem Ausgang 42 eines Referenzoszillators 43 verbunden. Der Referenzoszillator 43 erzeugt ein quarzstabiles Oszillatorsignal mit der Frequenz von 4,43 MHz.

Der Ausgang 44 der Phasenvergleichsschaltung 40 ist mit dem Eingang 45 eines Abtast- und Haltegliedes 49, mit dem Eingang 46 eines Abtast- und Haltegliedes 50, mit dem Eingang 47 eines Abtast- und Haltegliedes 51 und mit dem Eingang 48 eines Abtast- und Haltegliedes 52 verbunden. Gesteuert werden die vier Abtast- und Halteglieder von einer Auswahlschaltung 53, die den Farbsynchronaustastimpuls und einen zeilenfrequenten Impuls erhält. Nur ein Abtast- und Halteglied ist während der Farbsynchronaustastzeit im Abtastzustand und die anderen drei im Haltezustand. So ist z.B. während einer ersten Farbsynchronaustastzeit das Abtast- und Halteglied 49 im Abtastzustand und die restlichen drei Abtast- und Halteglieder im Haltezustand. Während der nächsten Farbsynchronaustastzeit ist das Abtast- und Halteglied 50 im Abtastzustand und die anderen im Haltezustand. In der nächsten Farbsynchronaustastzeit ist das Abtast- und Halteglied 51 im Abtastzustand und in der darauffolgenden Farbsynchronaustastzeit das Abtast- und Halteglied 52. Dann beginnt der Abtastzyklus mit dem Abtast- und Halteglied 49 von neuem.

Die Ausgangssignale der vier Abtast- und Halteglieder 49 bis 52 werden in einem Addierer 54 überlagert und über einen Tiefpaß 55 mit einer hohen Grenzfrequenz einem ersten Eingang 56 eines Addierers 57 zugeführt. Der Ausgang 58 des Addierers 57 ist mit einem ersten spannungsgesteuerten Oszillator 59 verbunden. Der Oszillator 59 ist als RC-Oszillator ausgebildet und erzeugt ein Oszillatorsignal mit einer Freilauffrequenz von ca. 5,016 MHz, die einem Frequenzteiler 60 zugeführt wird, der einen Teilerfaktor von 8 hat.

Ein zweiter spannungsgesteuerter RC-Oszillator 61 erzeugt ein Oszillatorsignal mit einer Freilauffrequenz von ca. 5,016 MHz. Das Oszillatorsignal wird über einen Frequenzteiler 62 auf einen ersten Eingang 63 einer Phasenvergleichsschaltung 64 gegeben. Auch wird das zeilenfrequente Ausgangssignal des Frequenzteilers 62 der Auswahlschaltung 53 zugeführt. Der Frequenzteiler 62 besitzt einen Teilerfaktor von 321, d.h. er teilt die Frequenz des Oszillatorsignals des Oszillators 61 durch 321. Einem zweiten Eingang 65 der Phasenvergleichsschaltung 64 werden die aus dem wiedergegebenen Videosignal abgetrennten Zeilensynchronimpulse zugeführt und in der Phasenvergleichsschaltung in der Frequenz und Phase mit dem frequenzgeteilten Oszillatorsignal des Oszillators 61 verglichen. Das Ausgangssignal der Phasenvergleichsschaltung 64 wird über einen Tiefpaß 73 zur Störunterdrückung einerseits dem Eingang 66 des Addierers 57 und andererseits dem zweiten spannungsgesteuerten Oszillator 61 zugeführt.

Das Ausgangssignal des Frequenzteilers 60 wird auf eine Phasenfortschaltung 67 gegeben. Der Phasenfortschaltung 67 wird außerdem noch das zeilenfrequente Ausgangssignal des Frequenzteilers 62 und die Kopfkennimpulse zugeführt. Die Kopfkennimpulse geben jeweils den Wechsel zwischen den Videoköpfen an. Die Phasenfortschaltung 67 ist z.B. in der DE-AS 26 46 806 näher beschrieben. In ihr wird die Phase des Ausgangssignals des Frequenzteilers 60 während einer Zeile um einen konstanten Betrag verändert. So wird z.B. während eines Halbbildes von Zeile zu Zeile die Phase um 90° verändert, so daß während jeder vierten Zeile die gleiche Phasenlage vorliegt, und während des nächsten Halbbildes die Phase unverändert gelassen.

Das frequenzgeteilte und in der Phase teilweise veränderte Ausgangssignal der Phasenfortschaltung 67 mit einer Frequenz von 627 kHz wird einem ersten Eingang 68 eines Mischers 69 zugeführt. Ein zweiter Eingang 70 des Mischers 69 ist mit dem Ausgang 42 des Referenzoszillators 43 verbunden. Am Ausgang 71 des Mischers 69 liegt ein Mischsignal mit den beiden Frequenzanteilen von 5,06 MHz und 3,8 MHz vor. Dieses Mischsignal wird über einen Bandpaß 72, der den niederfrequenten Signalanteil unterdrückt, als dritter Träger dem Eingang 36 des Modulators 35 zugeführt.

Im folgenden wird nun die Funktion der Schaltungsanordnung erläutert. Der zweite spannungsgesteuerte Oszillator 61 wird exakt auf das 321-fache der Zeilenfrequenz geregelt. Der erste spannungsgesteuerte Oszillator 59 hat auf Grund von Bauelementestreuungen eine nur wenig abweichende Frequenz vom zweiten spannungsgesteuerten Oszillator 61. Durch die Steuerspannung der Phasenvergleichsschaltung 64 wird der erste spannungsgesteuerte Oszillator 59 in die Nähe der Frequenz des zweiten spannungsgesteuerten Oszillators 61 gezogen. Die Frequenz und die Phase des ersten spannungsgesteuerten Oszillators 59 wird endgültig durch das dem Eingang 56 des Addierers 57 zugeführte Steuersignal festgelegt. Aus dem Ausgangssignal des spannungsgesteuerten Oszillators 59 wird nach der Frequenzteilung im Frequenzteiler 60 und einer eventuellen Phasenänderung in der Phasenfortschaltung 67 das 627 kHz-Signal erzeugt.

Die Funktion des aus dem spannungsgesteuerten Oszillator 61, des Frequenzteilers 62, der Phasenvergleichsschaltung 64 und des Tiefpasses 73 gebildeten Phasenregelkreises ist auch wie bekannt Geschwindigkeitsänderungen, die sich als Frequenzänderung bemerkbar machen, zu eleminieren. Die Frequenzänderungen sind gleichzeitig im Farbsynchronsignal und Zeilensynchronimpuls vorhanden, so daß sie sich bei der Mischung gegenseitig aufheben.

Bei der Aufzeichnung ist während eines Halbbildes von Zeile zu Zeile die Phase um 90° verändert worden und während des folgenden Halbbildes die Phase unverändert gelassen worden. Bei der Wiedergabe wird diese Phasenänderung nun rückgängig gemacht. Da in den Abtast- und Halteschaltungen 49 bis 52 nur das Ausgangssignal der Phasenvergleichsschaltung 40 während der Farbsynchronsignalaustastzeit gespeichert wird, werden im folgenden auch nur die Lagen der Farbsynchronsignale im Farbkreis
für aufeinanderfolgende Zeilen betrachtet. Im Diagramm a
der Fig. 4 sind die am Eingang 34 des Modulators 35 zugeführten während der Aufzeichnung fortgeschalteten Farbsynchronsignale dargestellt. Im Diagramm b der Fig. 4 sind
die Farbsynchronsignale einer Nebenspur aufgezeichnet, die
bei der Aufzeichnung nicht fortgeschaltet wurden und durch
Übersprechen dem Nutzsignal nun überlagert sind. Im
Diagramm c der Fig. 4 sind die nach der Modulation dem
Eingang 39 der Phasenvergleichschaltung 40 zugeführten
Farbsynchronsignale der Hauptspur aufgezeichnet. Im
Diagramm d der Fig. 4 sind die nun bei der Modulation
fortgeschalteten dem Nutzsignal überlagerten Übersprechstörungen dargestellt. Am Ausgang 44 der Phasenvergleichsschaltung 40 liegt außer dem eigentlichen Steuersignal ein
Signal bedingt durch die PAL-Umschaltung mit halber
Zeilenfrequenz und ein Signal bedingt durch die Übersprechstörungen mit einem Viertel der Zeilenfrequenz vor.
Dieses Signal, dessen Frequenz ein Viertel der Zeilenfrequenz beträgt, ist im Diagramm e der Fig. 4 gezeigt. Da
das durch die Übersprechstörungen verursachte Störsignal
sich periodisch nach vier Zeilen wiederholt, löscht es
sich in dem den vier Abtast- und Haltegliedern 49 bis 52
nachgeschalteten Addierer 54 aus. Wie aus der Schaltungsanordnung nach Fig. 1 bekannt, mittelt sich ebenso das die
PAL-Umschaltung verursachte halbzeilenfrequente Störsignal
heraus. Das über den Tiefpaß 55 dem Addierer 57 zugeführte
Steuersignal enthält nur noch die Information über die
Phasenabweichung.

Die oben beschriebene Schaltungsanordnung für einen
Viedeorecorder kann z.B für den Betrieb mit einem Band von
6 bzw.8 Stunden Spieldauer verwendet werden, da dort
merkliche Übersprechstörungen auftreten. Bei der Wiedergabe von einem Band mit 4 Stunden Spieldauer tritt eine geringe Übersprache auf. Die Steuerschaltung 53 kann nun so ausgelegt werden, daß bei der Wiedergabe von einem Band mit 4 Stunden Spieldauer zwei Abtast- und Halteglieder abgeschaltet werden und so die Regelgeschwindigkeit erhöht wird. Dem Steuersignal der Phasenvergleichsschaltung ist ein Störsignal bedingt durch die PAL-Umschaltung überlagert, das durch die beiden nicht abgeschalteten Abtast- und Halteglieder unterdrückt wird.

In einem NTSC-Videorecorder nach dem VHS-System wird die dem Farbsynchronsignal überlagerte Übersprechstörung mit zwei Abtast- und Haltegliedern beseitigt, da diese wegen der nicht vorhandenen Umschaltung des Farbsynchronsignals von Zeile zu Zeile mit halbe Zeilenfrequenz auftreten.

Die erfindungsgemäße Schaltungsanordnung kann auch in einem Videorecorder nach dem PAL-System im Aufnahmezustand eingesetzt werden. Dabei wird, ähnlich wie in der Schaltungsanordnung für einen Fernsehempfänger nach Fig. 1, die durch die PAL-Umschaltung bedingte halbzeilenfrequente Störung eliminiert.

PATENTANSPRÜCHE

1.        Schaltungsanordnung für ein Farbbildaufzeichnungs- und Wiedergabegerät oder einen Farbfernsehempfänger, mit einem Phasenregelkreis, der einen spannungsgesteuerten Oszillator und eine Phasenvergleichsschaltung umfaßt, die einen ersten Eingang zum Zuführen eines Farbsynchronsignals, einen zweiten Eingang zum Zuführen eines aus dem Oszillator abgeleiteten Signals und einen Ausgang enthält, der mit einem Steuereingang des Oszillators gekoppelt ist, dessen Ausgang mit dem zweiten Eingang der Phasenvergleichsschaltung gekoppelt ist, dadurch gekennzeichnet, daß der Ausgang der Phasenvergleichsschaltung über wenigstens ein erstes und ein zweites Abtast- und Halteglied mit einem ersten bzw. zweiten Eingang eines Addierers gekoppelt ist, dessen Ausgang mit dem Steuereingang des Oszillators gekoppelt ist, und daß die Abtast- und Halteglieder eingerichtet sind zum im zeilenweisen Wechsel nacheinander Abtasten des Ausgangssignals der Phasenvergleichsschaltung während der Farbsynchronaustastzeiten.

2.        Schaltungsanordnung nach Anspruch 1 für eine Fernsehempfänger nach der PAL-Norm, dadurch gekennzeichnet, daß ein PAL-Dekoder zur Gewinnung der Farbdifferenzsignale vorgesehen ist mit einem ersten Eingang zum Zuführen eines Farbartsignals und mit einem zweiten Eingang, der mit dem Ausgang des Oszillators gekoppelt ist, und daß der Phasenvergleichsschaltung zwei Abtast- und Halteglieder nachgeschaltet sind.

3.      Schaltungsanordnung nach Anspruch 1 für ein Bildaufzeichnungs- und Wiedergabegerät,
dadurch gekennzeichnet, daß ein Modulator vorgesehen ist zum Modulieren eines Farbartsignals von einem ersten auf einen zweiten Träger mittels eines dritten Trägers, daß der Modulator einen ersten Eingang zum Zuführen des Farbartsignals, einen zweiten Eingang zum Zuführen des dritten Trägers und einen Ausgang enthält, der mit dem ersten Eingang der Phasenvergleichsschaltung gekoppelt ist, daß zur Wiederherstellung der Originalphasenlage des zweiten Trägers und zum Rückgängigmachen der bei der Aufzeichnung beim ersten Träger vorgenommenen Phasen-veränderung eine Phasenfortschaltung dem spannungs-gesteuerten Oszillator nachgeschaltet ist und daß zur Bildung des dritten Trägers ein Mischer mit einem ersten und einem zweiten Eingang vorgesehen ist, die jeweils mit einem Ausgang der Phasenfortschaltung und eines Referenzoszillators gekoppelt sind.

4.      Schaltungsanordnung nach Anspruch 3 für ein Bildaufzeichnungs- und Wiedergabegerät nach der PAL-Norm,
dadurch gekennzeichnet, daß der Phasenvergleichsschaltung wenigstens vier Abtast- und Halteglieder nachgeschaltet sind.

Fig.1

a.)

b.)

Fig.2

Fig.3

a.)

b.)

c.)

d.)

e.)

Fig.4

2-TT-PHD 85-104